Europäisches Patentamt

European Patent Office

Office européen des brevets

(19)

(11) Veröffentlichungsnummer: **0 452 528 A1**

## (12) EUROPÄISCHE PATENTANMELDUNG

(21) Anmeldenummer: 90107429.4

(22) Anmeldetag: 19.04.90

(51) Int. Cl.5: **A23L 1/317**, A22C 7/00

(43) Veröffentlichungstag der Anmeldung:
23.10.91 Patentblatt 91/43

(84) Benannte Vertragsstaaten:
**AT BE CH DE DK ES FR GB GR IT LI LU NL SE**

(71) Anmelder: **E.M. DELIKATESSEN GmbH**
**Liegnitzer Strasse 2**
**W-5603 Wülfrath(DE)**

(72) Erfinder: **Mitzalis, Emmanuel**
**Papanastasiou 21**
**GR-15452 Paleo Psichiko (Athen)(GR)**
Erfinder: **Salafatinos, James**
**Am Braken 43**
**W-5603 Wülfrath(DE)**

(74) Vertreter: **Eikel, Cordula**
**Nördlinger Strasse 17**
**W-4000 Düsseldorf 13(DE)**

(54) **Verfahren zur Herstellung eines Fleischkuchens und Vorrichtung zur Durchführung des Verfahrens.**

(57) Bei einem Verfahren zur Herstellung eines Fleischkuchens wird zunächst eine Hackmasse erzeugt, und aus dieser Hackmasse ein länglicher Rohling geformt, der von einem Dorn durchdrungen wird.

Um bei der Herstellung eines Fleischkuchens, insbesondere der Herstellung von Gyros, Gewicht- und Volumenverluste bei der Zubereitung, d. h. beim Braten des Fleischkuchens, zu verhindern bzw. erheblich zu vermindern, die Handhabung zu vereinfachen und die Material-, Lagerungs- und Transportkosten ebenfalls zu verringern, wird bei der Herstellung des Fleischkuchens der Rohling aufrecht stehend in einem Ofen vorgegart, die Vorgarung bei einer bestimmten Ofeninnentemperatur, die +65°C bis +90°C nicht überschreitet und einer bestimmten Luftfeuchtigkeit, die 60 % bis 90 % nicht unter- und überschreitet, vorgenommen und bis zum Erreichen einer Rohlingsinnentemperatur von mindestens +65°C fortgesetzt, und zur Durchführung dieser Maßnahmen ein den Rohling durchdringender Dorn bereitgestellt, der einen als Rohr ausgestalteten zylindrischen Hohlkörper aufweist, wobei an einem Ende dieses Hohlkörpers eine flanschartig angeordnete Grundplatte vorgesehen ist.

Die Erfindung betrifft ein Verfahren zur Herstellung eines Fleischkuchens mit den Merkmalen des Oberbegriffes des Patentanspruches 1 sowie eine Vorrichtung zur Durchführung des Verfahrens zur Herstellung eines Fleischkuchens mit den Merkmalen des Oberbegriffes des Patentanspruches 8.

Bei bekannten Verfahren zur Herstellung eines Fleischkuchens, z. B. Gyros, wird zunächst einmal das zu benutzende Fleisch zu Hack verarbeitet, um dann, nach Zuführung der entsprechenden Gewürze bzw. Ingredenzien, in einer Presse zu einem länglichen Rohling verarbeitet zu werden. Nach Erhalt des Rohlings wird dieser auf die gewünschte Form zurechtgeschnitten, bei Gyros in eine kegelstumpfförmige Form.

Da es zur einfachen Handhabung bei der Zubereitung des Gyros in den dafür speziellen Bräter notwendig ist, daß der Gyrosrohling eine ihn durchdringende Öffnung aufweist, wird in die zurechtgeschnittene Form ein sie durchdringender Dorn eingeführt, der entweder aus einer aluminiumbeschichteten Pappe besteht und in dem Gyrosrohling verbleibt oder aber derart ausgestaltet ist, daß mittels des Dornes eine aluminiumbeschichtete, die Innenseite der Öffnung bildende Wandung eingeführt wird, die dann ebenfalls in dem Gyros verbleibt und entsprechend stark ausgestaltet sein muß, um so den weiteren Erhalt der Öffnung gewährleisten zu können.

Nach dem Einführen dieser aluminiumbeschichteten Öffnungswandung wird nun der Rohling schockgefroren, um dann anschließend bei entsprechenden Minustemperaturen gelagert werden zu können.

Um die gewünschte Form des Gyrosrohlings zu gewährleisten ist es notwendig, den gefrorenen Zustand des Rohlings bis unmittelbar vor dem eigentlichen abschließenden Bratvorgang zu erhalten und den Gyrosrohling in gefrorenem Zustand dem Bratvorgang zuzuführen, so daß beim anschließenden Bratvorgang erhebliche Verluste an Gewicht und Volumen auftreten, was unter anderem zu einer ungewollten Veränderung der erwünschten Form führt, und zu einem erhöhten Energiebedarf beim Bratvorgang.

Es ist nicht nur notwendig den Gyrosrohling während der Lagerung oder des Transportes in einem gefrorenem Zustand zu halten, sondern auch während der Lagerung beim Endverbraucher, unmittelbar vor dem eigentlichen Bratvorgang.

Eine Vakuumverpackung des Gyrosrohlings ist nicht ohne weiteres möglich, da bei einer derartigen Verpackung diese nicht nur vakuumdicht, sondern auch formstabilisierend ausgestaltet sein müßte.

Hinzu kommt, daß die, das Gyros durchdringende Öffnung erhaltende Einlage entsprechend stark ausgestaltet sein muß, um Form und Größe der Öffnung, sowohl während des Einfrierprozesses als auch während der Handhabung des Gyros, zu gewährleisten, so daß die Einlage entsprechend kostenaufwendig erstellt werden muß.

Der Erfindung liegt die Aufgabe zugrunde, ein Verfahren zur Herstellung eines Fleischkuchens, insbesondere zur Herstellung von Gyros, und eine Vorrichtung zur Durchführung des erfindungsgemäßen Verfahrens zu schaffen, bei der Gewicht- und Volumenverluste bei der Zubereitung, d. h. beim Braten des Fleischkuchens, verhindert bzw. erheblich vermindert werden, die Handhabung vereinfacht und die Material-, Lagerungs- und Transportkosten verringert werden.

Diese Aufgabe wird bei einem Verfahren der eingangs genannten Gattung zur Durchführung des erfindungsgemäßen Verfahrens mit den Merkmalen des kennzeichnenden Teiles des Patentanspruches 1 und bei einer Vorrichtung der eingangs genannten Gattung mit den Merkmalen des kennzeichnenden Teiles des Patentanspruches 8 gelöst. Weitere vorteilhafte Ausgestaltungen der Erfindung sind Gegenstand der Unteransprüche 2 bis 7 und 9 bis 10.

Dadurch, daß der Rohling aufrecht stehend in einem Ofen vorgegart wird, daß die Vorgarung bei einer bestimmten Ofeninnentemperatur, die +65°C bis +90°C nicht überschreitet und einer bestimmten Luftfeuchtigkeit, die 60% bis 90% nicht unter- und überschreitet, vorgenommen wird und bis zum Erreichen einer Rohlingsinnentemperatur von mindestens +65°C fortgesetzt wird, wird ein Fleischkuchen, insbesondere Gyros, geschaffen, der beim Braten lediglich geringe, d. h. zu vernachlässigende Verluste an Gewicht und Volumen aufweist, d. h. weitgehend gewichtskonstant und volumenkonstant bleibt. Durch das erfindungsgemäße Verfahren wird gewährleistet, daß während des Vorgarprozesses der lediglich gepreßte Rohling oder aber der zusätzlich geschnittene Rohling trotz des Vorgarprozesses in seiner Form verbleibt und weder auseinanderbricht noch seine Form verändert. Desweiteren wird erreicht, daß das in den Rohling gestanzte Loch ebenfalls formkonstant bleibt, ohne daß zur Abstützung notwendige Hilfsmittel nach dem Vorgarprozeß vonnöten sind. Ebenso ist es durch das erfindungsgemäße Verfahren möglich, den Rohling nicht, wie bisher notwendig, aus Stabilisierungsgründen tiefzugefrieren, sondern diesen vakuumverpackt lagern zu können, ohne daß weitere Hilfsmittel zur Formkonstanz notwendig sind und der so vorgegarte Rohling durch z. B. Einschweißen in eine Folie über einen größeren Zeitraum haltbar ist.

Wird die Vorgarung bei einer Ofeninnentemperatur von +73°C und einer Luftfeuchte von 80% vorgenommen und fortgesetzt bis die Rohlinginnentemperatur +69°C beträgt, so ist dadurch in besonderer Weise sowohl die Formstabilität während des Vorgarprozesses als auch nach dem Vorgarprozeß gewährleistet.

Liegt die Ofeninnentemperatur während des gesamten Vorgarprozesses wenigstens etwas +15°C bis +25°C über der Innentemperatur des Rohlings, bis eine Ofeninnentemperatur von +65°C bis +90°C erreicht ist, so kann damit der Vorgarprozeß auf besonders energiesparende Weise vorgenommen werden, ohne daß die Haltbarkeit bzw. Formbeständigkeit des Gyrosrohlings beeinträchtigt wird.

Beträgt die Innentemperatur des Rohlings zu Beginn des Vorgarprozesses -4°C bis +0°C, so ist dadurch eine einfache Handhabung des Rohlings vor dem eigentlichen Vorgarprozeß gewährleistet, ohne daß der Rohling während der Vorbereitung des Vorgarprozesses mit besonderer, die Formstabilität garantierender Handhabung bedacht werden muß.

Ist der Rohling kegelstumpfförmig ausgestaltet und steht er während des Vorgarens auf der den kleineren Durchmessers aufweisenden Seite auf, so weist der Rohling nach dem Vorgaren bereits die bei der späteren Benutzung gewünschte Form auf, und behält diese auch während des Vorgarens bei, ohne daß die Gefahr besteht, daß der Rohling während des Garprozesses seine Form verändert, d. h. eine unerwünschte Form annimmt. Dadurch wird somit gewährleistet, daß keine Hackmassen vorgegart werden müssen, die nach dem Vorgarprozeß dann entfernt werden müßten, um eine kegelstumpfförmige Form zu erzielen.

Wird in den Rohling vor dem Vorgaren ein ihn in Längsrichtung durchdringender Dorn eingeführt und wird der Rohling mit dem ihn durchdringenden Dorn dem Vorgarprozeß zugeführt, so wird dadurch eine im Rohling erwünschte, ihn durchdringende Öffnung geschaffen, die nach dem Garprozeß ohne weitere Hilfsmittel mit einem konstanten Innendurchmesser im Rohling verbleibt. Der Dorn kann nach dem Garprozeß ohne weitere Schwierigkeiten aus dem Rohling bzw. Fleischkuchen entfernt werden, da der Dorn nach dem Erkalten im Durchmesser schrumpft und so ein Entfernen des Dorns ohne technische Schwierigkeiten oder Beschädigung der gewünschten Öffnung möglich ist.

Steht die während des Vorgarprozesses aufstehende Seite des Rohlings auf einer flanschartigen Grundplatte des Dornes auf, so ist sowohl vor als auch während und nach dem Garprozeß eine einfache Handhabung des Rohlings bzw. des Gyrosrohlings gewährleistet, da dieser ohne besondere Hilfsmittel in und aus dem Garprozeß entfernt werden kann, ohne daß die Gefahr einer Beschädigung der Außenfläche des Rohlings besteht.

Dadurch, daß der den Rohling durchdringende Dorn einen als Rohr ausgestalteten zylindrischen Hohlkörper aufweist und daß an einem Ende dieses als zylindrischer Hohlkörper ausgestalteten Rohres eine flanschartig angeordnete Grundplatte vorgesehen ist, ist zum einen ein Dorn geschaffen, der sich durch einfache aber zuverlässige Handhabung auszeichnet, der aufgrund der Ausgestaltung ein nur geringes Gewicht aufweist und die Bildung einer paßgenauen Öffnung gewährleistet. Desweiteren ist dadurch ein einfaches Handling der zu garenden Rohlinge möglich, ohne daß hierzu weitere Hilfsmittel vonnöten wären.

Ist wenigstens das die flanschartige Grundplatte aufweisende Ende des Rohres offen ausgestaltet, so wird dadurch die Möglichkeit geschaffen, daß der Fleischkuchen während des Handlings durch einen in den Dorn einzuführenden Zapfen transportiert und gehalten, aus dem Garprozeß entfernt werden kann und zum anderen, daß die Warmluft auch in den Dorn eindringen kann, um so den Garprozeß zu beschleunigen.

Weist die Wandung des Rohres Öffnungen auf, so führt dies zu einer direkten Kontaktierung des Rohlingsinneren mit der im Garofen herrschenden Wärme und Feuchte, so daß hierdurch sowohl eine Beschleunigung des Garprozesses als auch eine genaue Ansteuerung des Garprozesses erzielt wird.

Durch das erfindungsgemäße Verfahren und dem erfindungsgemäßen Aufbau der Vorrichtung wird somit die Möglichkeit geschaffen, einen Fleischkuchen, d. h. insbesondere einen Gyrosrohling, herzustellen bzw. vorzugaren, ohne daß die Gefahr besteht, daß dieser beim Garprozeß spröde wird, d. h. austrocknet, die Form verliert oder gar bricht und gleichzeitig das entsprechende Volumen und Gewicht beibehält. Es kann durch das erfindungsgemäße Verfahren auf ein Schockgefrieren zur Formstabilisierung des Rohlings während des Handlings, der Lagerung und des Transportes sowie zur Haltbarmachung verzichtet werden, so daß sowohl die Kosten während der Handhabung des Gyrosrohlings, hervorgerufen durch ein besonders vorsichtiges Handling, als auch die Lagerungs- und Transportkosten erheblich vermindert werden. Gleichzeitig wird ein Rohling geschaffen, der sich durch eine hohe Form- und Gewichtsstabilität auszeichnet und bei dem die gewünschte, den Rohling durchdringende Öffnung ebenfalls eine hohe Stabilität und Formgenauigkeit aufweist, ohne daß es hierzu weiterer Hilfsmittel bzw. irgendwelcher Hilfsmittel bedarf.

In der Zeichnung ist ein Ausführungsbeispiel eines nach dem erfindungsgemäßen Verfahren hergestellten Gyros und der erfindungsgemäße Dorn zur Durchführung des erfindungsgemäßen Verfahrens schematisch dargestellt, und zwar zeigt

Figur 1      eine Vorderansicht eines Gyrosrohlings nach dem Preßvorgang,

Figur 2      eine Vorderansicht des Gyrosrohlings mit einem ihn koaxial durch-

Figur 3     eine perspektivische Vorderansicht des Gyrosrohlings mit in ihm angeordneten erfindungsgemäßen Dorn,

Figur 4     eine perspektivische Vorderansicht der Gyrosmasse in Kegelstumpfform, mit in ihr angeordneten erfindungsgemäßen Dorn,

Figur 5     eine perspektivische Ansicht des erfindungsgemäßen Dornes zur Durchführung des erfindungsgemäßen Verfahrens,

Figur 6     eine perspektivische Vorderansicht des nach dem Verfahren hergestellten Gyros, wobei der unterbrochen dargestellte Gyroskörper diesen während Entfernung des Dornes darstellt und,

Figur 7     eine perspektivische Vorderansicht des nach dem Verfahren hergestellten Gyros mit in das Loch eingebrachter Röhre.

Bei dem erfindungsgemäßen Verfahren wird das Gyros, z. B. bestehend aus einer Mischung von Rind- und Lammfleisch, derart hergestellt, daß zunächst einmal beide Fleischsorten in gefrorenem Zustand bei etwa minus 4°C durch einen sogenannten Fleischwolf gedreht und anschließend vermischt werden, so daß eine Hackmischung bestehend aus Rind- und Lammfleisch vorliegt.

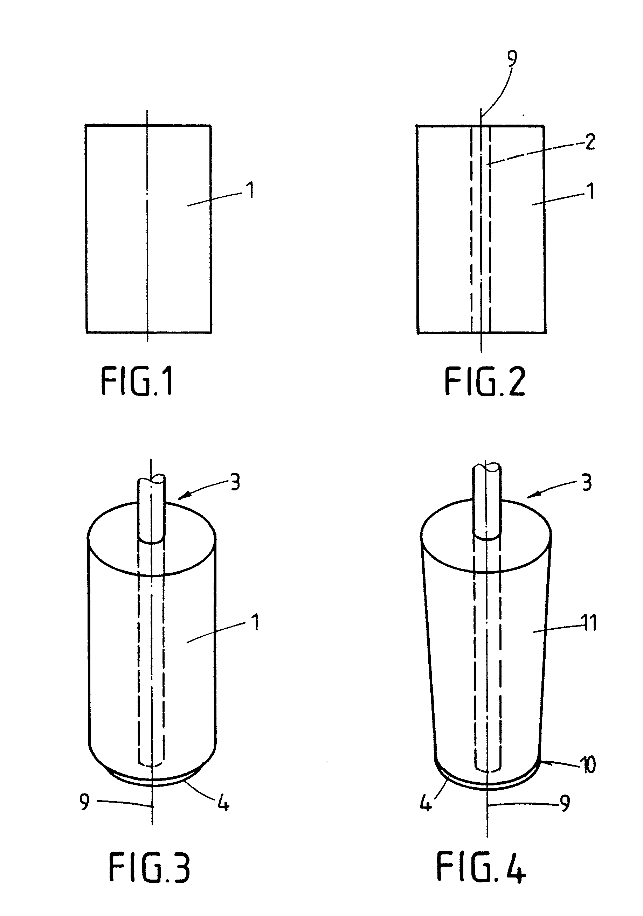

Diese Hackmischung wird nach Beimengung der entsprechenden Gewürze bzw. Ingredenzien in eine Presse gegeben, in der die vorliegende Mischung dann unter hohem Druck zu einem sogenannten Rohling (1), dargestellt in Figur 1, gepreßt wird. Der Druck unter dem diese Pressung vorgenommen wird, beträgt beispielsweise 100 kg pro cm².

Während des Preßvorgangs ist die Preßform mit einem Kunststoffmantel ausgekleidet, der nach Entfernen des Rohlings (1) diesen an seiner Mantelfläche umgibt. Die Rohlingtemperatur liegt nach Verlassen der Presse ebenfalls noch unter ±0°C, d. h. im Bereich um etwa -4°C.

Nachdem der Rohling (1) die Presse verlassen hat, wird er einer, hier nicht dargestellten, Stanzvorrichtung zugeführt, in der in den Rohling (1) ein koaxial mit seiner Mittelachse (9) angeordnetes zylindrisch ausgestaltetes ihn in seiner Längsrichtung durchdringendes Loch (2) eingestanzt wird. Diese Stanzung erfolgt mittels eines hydraulisch oder eines durch Preßluft zu betätigenden Dornes, so daß der Rohling (1) nach dem Stanzvorgang, wie in Figur 2 dargestellt, ein zu seiner Mittelachse (9) koaxial angeordnetes, ihn in seiner Länge durchdringendes Loch (2) aufweist.

In einem nächsten Arbeitsgang wird in den Rohling (1), d. h. in das ihn durchdringende Loch (2), wie in Figur 3 dargestellt, beginnend mit einem Ende ein Dorn (3) eingebracht, an dessen anderem Ende eine Grundplatte (4) angeordnet ist. Der Gyrosrohling (1) kommt dabei mit seiner, in Blickrichtung Figur 3, Unterseite in direkten Berührungskontakt mit der Oberseite der Grundplatte (4).

Nun wird in der nächsten Arbeitsstation zunächst die den Mantel des Rohlings (1) umgebende Kunststoffhülle entfernt. Anschließend wird der Rohling (1) kegelstumpfförmig zugeschnitten bzw. zugesägt, wobei der, in Blichrichtung Figur 4, untere Teil des kegelstumpfförmigen Rohlings (11) derart zugeschnitten wird, daß dieser plan bzw. in einer Flucht mit der Seitenkante (10) der Grundplatte (4) abschließt.

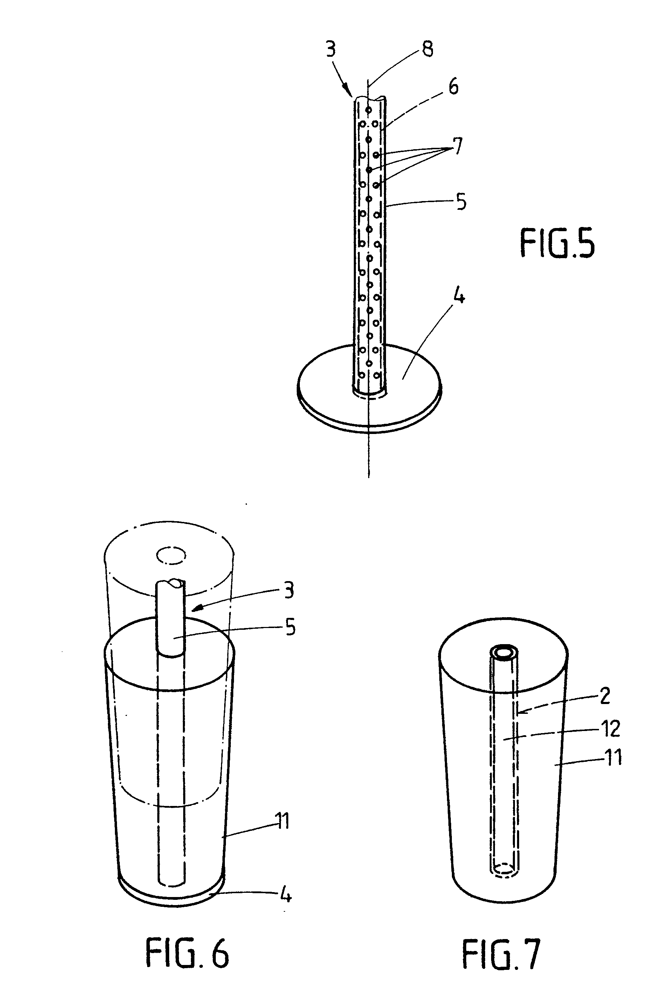

Der Dorn (3) weist, wie in Figur 5 dargestellt, einen als Rohr ausgestalteten zylindrischen Hohlkörper (5) auf, der mit seinem einen Ende die Grundplatte (4) durchstößt und an ihrer, in Blickrichtung Figur 5, Unterseite plan mit dieser abschließt. Die Grundplatte (4) ist dabei flanschartig an dem einen Ende des Dornes (3) bzw. des zylindrischen Hohlkörpers (5) im rechten Winkel zur Längsachse (8) des Dornes (3) angeordnet, wobei der zylindrische Hohlkörper (5) die Grundplatte (4) derart durchstößt, daß das Rohr (5), in Blickrichtung Figur 5, nach unten geöffnet ist.

Der zylindrische Hohlkörper (5) ist mit in einem Abstand zueinander angeordneten, seine Wandung (6) durchstoßenden Öffnungen (7) versehen, die etwa über den gesamten Umfang und die gesamte Länge des zylindrischen Hohlkörpers (5) verteilt angeordnet sind.

Der, in Figur 4 dargestellte, kegelstumpfförmig zugeschnittene Rohling (1) mit dem darin befindlichen Dorn wird in einen sogenannten, hier nicht dargestellten, Garofen verbracht, um dort erfindungsgemäß vorgegart zu werden. Dabei steht das den kleineren Durchmesser des Kegelstumpfes (11) aufweisende Ende der Gyrosmasse auf der Grundplatte (4) auf, und befindet sich im Garofen in einer mit seiner Mittelachse (9), vertikalen Ausrichtung, wobei die Grundplatte (4) mit ihrer der Gyrosmasse abgewandten Seite auf einer, hier nicht dargestellten, dafür vorgesehene Abstützung aufliegt.

Diese Abstützung kann der Boden eines verfahrenbaren, mehrere Böden aufweisenden, dem Transport und der Lagerung der Gyrosmasse dienenden Rollwagen sein, der während des Garprozesses im Ofen verbleibt.

Beim Einbringen der Gyrosmasse in den Ofen weist die Gyrosmasse noch eine Kerntemperatur von etwa -2°C bis -3°C auf.

Zunächst einmal ist es möglich, die Gyrosmasse anzubräunen, d. h. die Außenschicht anzubräunen, wobei hierbei sowohl eine konstante Ofeninnentemperatur benutzt werden kann als auch verschiedene Anbräunungsschritte vorgenommen werden können.

Dabei ist es denkbar, die Gyrosmasse zunächst einmal bei einer Ofeninnentemperatur von +80°C und einer Luftfeuchte von 10% zu behandeln, wobei die Zeitdauer je nach Gewicht des Rohlings (1, 11) variieren und z. B. 20 Minuten betragen kann. In einem zweiten Schritt kann dann eine Temperaturerhöhung auf 90°C bei einer Luftfeuchte von ca. 10% folgen, wobei die Zeitdauer ebenfalls wieder variieren kann, in der Regel jedoch etwa 10 Minuten beträgt.

Nachdem in diesem Ausführungsbeispiel eine Anbräunung der Gyrosmasse erreicht wurde, wird nun die Ofentemperatur an die Kerntemperatur der Gyrosmasse derart angepaßt, daß die Ofentemperatur etwa +20°C höher liegt als die Kerntemperatur der Gyrosmasse und die Luftfeuchte während dieses Garprozesse bei 80% liegt.

Die Ofentemperatur wird nun dem suxessiven Anstieg der Kerntemperatur der Gyrosmasse derart angepaßt, daß die Ofentemperatur stets um +20°C höher liegt als die Kerntemperatur, wobei die Luftfeuchtigkeit auf 80% gehalten wird. Die Ofentemperatur wird dann nach Erreichen einer Temperatur von +73°C konstant gehalten ebenso wie die Luftfeuchtigkeit von 80%, ohne daß eine weitere Anpassung an die Kerntemperatur der Gyrosmasse vorgenommen wird.

Der Garprozeß wird dabei solange fortgesetzt, bis eine Kerntemperatur der Gyrosmasse von 69°C erreicht wird. Während des Arbeitsvorganges wird die Kerntemperatur kontinuierlich gemessen und die Ofentemperatur entsprechend angepaßt bis, wie oben beschrieben, eine Ofentemperatur von +73°C erreicht wird.

Während der Ofenbehandlung wäre es auch denkbar, den vorgeschalteten Anbräunungsprozeß auf eine andere Art und Weise vorzunehmen oder aber ganz auf ihn zu verzichten.

Der Garprozeß kann auch ausschließlich entsprechend des erfindungsgemäßen Verfahrens ohne eine kontinuierliche Anpassung an die Kerntemperatur, d. h. bei einer konstanten Ofentemperatur von +73°C und einer Luftfeuchte von 80% vorgenommen werden, bis eine Kerntemperatur von 69°C erreicht wird.

Dabei ist es denkbar, daß eine Anbräunung z. B. durch diese Temperaturen bei einer während des Anbräunungsprozesses geringer Luftfeuchte erzielt wird.

Während des im Ofen vorgenommenen Gar- und Bräunungsprozesses übertragen sich die dort herrschenden Temperaturen und gelangt die im Ofen herrschende Luftfeuchte über das Innere des hohl ausgebildeten Dornes (3) bzw. des als zylindrischen Hohlkörper ausgestalteten Rohres (5) und von dort über die Öffnungen (7) in direkten Kontakt mit dem inneren Teil der kegelstumpfförmig zugeschnittenen Gyrosmasse, so daß die im Ofen herrschenden Temperaturen sowohl von außen als auch von innen mit der zu garenden Gyrosmasse in Kontakt gelangen.

Nach Beendigung des Garprozesse, d. h. mit Erreichen einer Kerntemperatur von 69°C wird das gegarte Gyros dem Ofen entnommen und einer Kühlstation zugeführt, in der das Gyros über einen vorbestimmten Zeitraum, der z. B. 1 bis 2 Stunden betragen kann, abkühlt.

Nach dem Abkühlen wird, wie in Figur 6 dargestellt, das Gyros vom Dorn (3) entfernt, wobei es durch das Erkalten des Dornes (3) bzw. des Rohres (5) zu einer Verringerung des Dorndurchmessers kommt, so daß der Dorn (3) bzw. das Rohr (5) auf einfache Weise dann durch Herausziehen aus der Gyrosmasse gemeinsam mit der Grundplatte (4) entfernt und in das, wie in Figur 7 dargestellt, Loch (2) eine mit Aluminium beschichtete Pappröhre (12) eingebracht werden kann.

Anschließend kann das Gyros auf z. B. 25°C minus tiefgefroren werden.

Ebenso ist es jedoch denkbar, daß das Gyros nicht tiefgefroren, sondern vakuumverpackt, bzw. in eine Folie verschweißt wird.

Nach dem Entfernen des Dornes (3) aus der Gyrosmasse, wie in Figur 6 dargestellt, verbleibt ein diese in axialer Richtung durchdringendes Loch (2), das keinerlei Fremdmaterialien zur Abstützung bedarf.

Durch die in der gegarten Gyrosmasse befindlichen Öffnung (2) kann dann, bei einer bestimmungsgemäßen Benutzung der Gyrosmasse, z. B. der Drehspieß eines Gyrosbräters durchgeführt werden.

## Patentansprüche

1. Verfahren zur Herstellung eines Fleischkuchens, bei dem zunächst eine Hackmasse erzeugt wird, und bei dem aus dieser Hackmasse ein länglicher Rohling (1, 11) geformt wird, **dadurch gekennzeichnet**, daß der Rohling (1, 11) aufrecht stehend in einem Ofen vorgegart wird, daß die Vorgarung bei einer bestimmten Ofeninnentemperatur die +65°C bis +90°C nicht überschreitet und einer bestimmten Luftfeuchtigkeit, die 60% bis 90% nicht unter- und überschreitet, vorgenommen wird und bis zum Erreichen einer Rohlinginnentemperatur von mindestens +65°C forgesetzt wird.

2. Verfahren zur Herstellung eines Fleischkuchens nach Anspruch 1, dadurch gekennzeichnet, daß die Vorgarung bei einer Ofeninnentemperatur von +73°C und einer Luftfeuchte von 80% vorgenommen wird und fortgesetzt wird bis die Rohlinginnentemperatur +69°C beträgt.

3. Verfahren zur Herstellung eines Fleischkuchens nach Anspruch 1 oder 2, dadurch gekennzeichnet, daß die Ofeninnentemperatur während des gesamten Vorgarprozesses wenigestens etwa 15°C bis 25°C über der Innentemperatur des Rohlings (1, 11) liegt, bis eine Ofeninnentemperatur von 65°C bis 90°C erreicht ist.

4. Verfahren zur Herstellung eines Fleischkuchens nach einem der Ansprüche 1 bis 3, dadurch gekennzeichnet, daß die Innentemperatur des Rohlings (1, 11) zu Beginn des Vorgarprozesses -4°C bis +0°C beträgt.

5. Verfahren zur Herstellung eines Fleischkuchens nach einem der Ansprüche 1 bis 4, dadurch gekennzeichnet, daß der Rohling (11) kegelstumpfförmig ausgestaltet ist und während des Vorgarens auf der den kleineren Durchmesser aufweisenden Seite aufsteht.

6. Verfahren zur Herstellung eines Fleischkuchens nach einem der Ansprüche 1 bis 5, dadurch gekennzeichnet, daß in den Rohling (1, 11) vor dem Vorgaren ein ihn in Längsrichtung durchdringender Dorn (3) eingeführt wird und daß der Rohling (1, 11) mit dem ihn durchdringenden Dorn (3) dem Vorgarprozeß zugeführt wird.

7. Verfahren zur Herstellung eines Fleischkuchens nach einem der Ansprüche 1 bis 6, dadurch gekennzeichnet, daß die während des Vorgarprozesses aufstehende Seite des Rohlings (1, 11) auf einer flanschartigen Grundplatte (4) des Dornes (3) aufsteht.

8. Vorrichtung zur Durchführung eines Verfahrens nach einem der Ansprüche 1 bis 7, dadurch gekennzeichnet, daß der den Rohling, (1, 11) durchdringende Dorn (3) einen als Rohr ausgestalteten zylindrischen Hohlkörper (5) aufweist und daß an einem Ende dieses als zylindrischer Hohlkörper ausgestalteten Rohres (5) eine flanschartig angeordnete Grundplatte (4) vorgesehen ist.

9. Vorrichtung nach Anspruch 8, dadurch gekennzeichnet, daß wenigstens das die flanschartige Grundplatte (4) aufweisende Ende des Rohres (5) offen ausgestaltet ist.

10. Vorrichtung nach einem der Ansprüche 8 bis 9, dadurch gekennzeichnet, daß die Wandung (6) des Rohres (5) Öffnungen (7) aufweist.

FIG.1

FIG.2

FIG.3

FIG.4

FIG.5

FIG. 6

FIG.7

Europäisches
Patentamt

**EUROPÄISCHER**
**RECHERCHENBERICHT**

Nummer der Anmeldung

**EP 90 10 7429**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | US-A-4 744 130  (EPSTEIN) <br> * das ganze Dokument * <br> — — — | 1,2,5-8 | A 23 L 1/317 <br> A 22 C 7/00 |
| Y | DE-A-3 830 971  (KOERBER) <br> * Spalte 2, Zeilen 37 - 49; Anspruch 9 * <br> — — — | 1,2 | |
| A | DE-A-2 918 253  (CORONEOS) <br> * das ganze Dokument * <br> — — — | 1,5 | |
| A | US-A-3 486 910  (SAEAZ) <br> * Spalte 5, Zeilen 4 - 12 * * Spalte 6, Zeilen 62 - 66; Anspruch 1 * <br> — — — | 1,2,1,2 | |
| A | EP-A-0 031 091  (TRAMP) <br> * Anspruch 3 * <br> — — — | 1 | |
| A | US-A-3 229 615  (RATTNER) <br> — — — | | |
| A | GB-A-1 116 294  (ARMOUR AND COMPANY) <br> — — — | | |
| A | EP-A-0 217 612  (ZANNETOS) <br> — — — — — | | |

RECHERCHIERTE
SACHGEBIETE (Int. Cl.5)

A 23 L
A 22 C
A 23 P

Der vorliegende Recherchenbericht wurde für alle Patentansprüche erstellt

| Recherchenort | Abschlußdatum der Recherche | Prüfer |
|---|---|---|
| Den Haag | 15 Januar 91 | DE LAMEILLIEURE D. |